Europäisches Patentamt

European Patent Office

Office européen des brevets

(11) Publication number: **0 168 948**
A1

# EUROPEAN PATENT APPLICATION

(21) Application number: 85304089.7

(22) Date of filing: **10.06.85**

(51) Int. Cl.⁴: **G 01 C 21/20**, B 43 L 7/06

(30) Priority: **20.06.84 GB 8415760**

(43) Date of publication of application: **22.01.86**
Bulletin 86/4

(84) Designated Contracting States: **BE FR GB IT NL**

(71) Applicant: **CAMPBELL, Forbes Sutherland, 8 Blomfield Road, St. Leonards-on-Sea East Sussex TN37 6HH (GB)**

(72) Inventor: **CAMPBELL, Forbes Sutherland, 8 Blomfield Road, St. Leonards-on-Sea East Sussex TN37 6HH (GB)**

(74) Representative: **Crawford, Fiona Merle et al, Elkington and Fife High Holborn House 52/54 High Holborn, London WC1V 6SH (GB)**

(54) **Parallel rulers.**

(57) The present invention relates to parallel rulers for use in navigation. The ruler comprises at least three elongate members (2 to 4) each linked to an adjacent one of these members by a pair of arms (5, 6) of equal length. The arms (5,6) are pivotally mounted at each end to said adjacent members such that for each pair of arms, the pivot points of a pair of arms on any one member define, with those on an adjacent member, the corners of a parallelogram.

# PARALLEL RULERS

The present invention relates to parallel rulers for use in, for example, navigation.

A parallel ruler is an instrument which is used for drawing a line spaced from but parallel to another or a series of such parallel lines. In general, they consist of a pair of parallel straight edges linked by a pair of mutually parallel arms of equal length. The ends of these arms are pivotally connected to the straight edges so as to permit the distance between these straight edges to be altered without altering their orientation with respect to each other.

Such parallel rulers are used in, for example, navigation to plot courses and bearing on Mercator projection charts. Such parallel rulers usually bear compass markings along three edges so that the ruler may also be used as a protractor.

The maximum distance over which these known parallel rulers can move in one operation is determined by the length of the linking arms, and hence, the overall length of the straight edges. This in turn, determines the accuracy achieved in using these instruments, which may decrease with the number of spanning steps required to move a straight edge of the ruler from a starting position to a desired final position across the chart/plotting surface due to any possible slip of the ruler during such movements.

On board merchant ships whose relative stability and size of chart table permit the use of rulers of a length of up to say 30 inches (76.2 cm) the operating conditions permit these rulers to be effective drawing instruments. However, on the majority of small craft, space is limited and the chart table is small being only able to take a folded chart (approx. 20 inches by 14 inches (5.08 cm x 3.56 cm)). In such circumstances the length of the ruler must be short and generally 12 inches to 15 inches (30.48 to 38.10 cm) rulers are employed. This, in turn, limits the length of the pivot arms and hence the maximum stepping span of the ruler. The pitching and rolling of such craft can make on board plotting conditions extremely difficult for the navigator while employing the ruler. Thus, the need to step the ruler several times in order to span a chart makes the use of such short rulers extremely difficult and leads to inaccuracies.

A number of solutions to this problem have been proposed in the past. These include the use of pulley systems and of universally jointed arms to connect the two straight edges. Such arrangements are complicated in structure and expensive to produce. Further, while they are able to span a greater distance than the rulers employing pivotal arms already described, they present their own difficulties in handling.

It is an object of the present invention to provide a parallel ruler which is simple to handle and covers a greater maximum span for a given length than the "pivotal arm" parallel ruler already known.

According to the present invention there is provided a parallel ruler comprising at least three elongate members each linked to an adjacent one of said members by a pair of arms of equal length, said arms being pivotally mounted at each end to said adjacent members such that the pivot points of a pair of arms on any one member define, with those of that pair on an adjacent member, the corners of a parallelogram, the two outermost elongate members defining a pair of parallel straight edges.

In one embodiment of the invention, the parallel ruler comprises two straight edge members and an intermediate member, all of which lie in a single plane. Two pairs of pivotally mounted arms link these three members, one of each pair being connected to the intermediate member at a common pivot point.

Rulers of the present invention have the advantage that they are simple in construction and thus relative cheap to produce while at the same time providing an instrument which is simple to use and can afford high levels of accuracy.

Furthermore, embodiments of the present invention employ a minimum of moving parts and associated pivot points, thereby reducing to a minimum any plotting inaccuracies which could arise at a later date due to "wear and tear" at the pivot points through continual usage. All this is achieved while maintaining the free flowing, easy to use action which should always be a feature of this type of instrument.

Embodiments of the present invention will now be described, by way of example, with reference to the accompanying drawings in which:

Fig. 1 illustrates an embodiment of the present invention in the closed position;

Fig. 2 illustrates the same embodiment as that shown in Figure 1 in an open position, and

Fig. 3 illustrates a further embodiment in an open position.

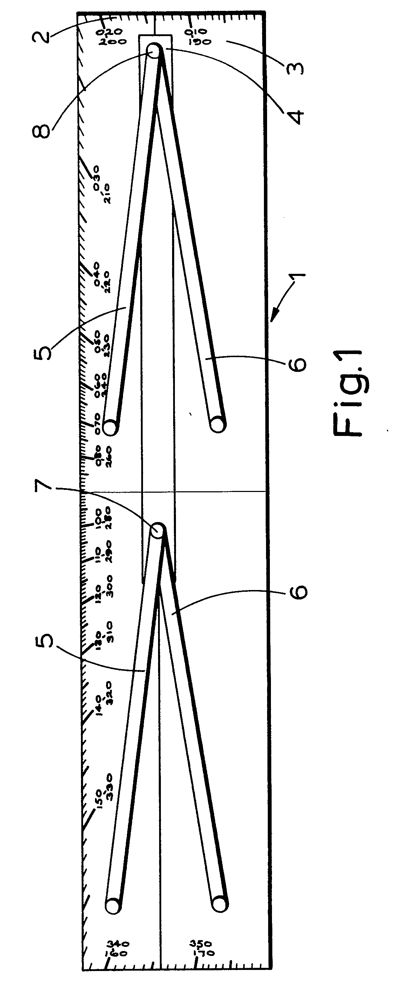

A parallel ruler 1 is shown in Figure 1 which comprises two straight edge members 2 and 3 and an intermediate member 4. These members 2 to 4 lie in a single plane and abut one another when the ruler is in the closed position as shown in this figure, member 4 being located in a recess defined by members 2 and 3.

In this preferred embodiment, the straight members 2 and 3 bear compass markings which extend along three bevelled side edges of the ruler 1 and which enable this ruler to be used as a protractor.

Each of the two straight edge members 2 and 3 are connected by a pair of arms 5 and 6 to the intermediate member 4. These arms are pivotally mounted at their ends to the members which they link. In this embodiment, both pairs of arms are mounted to the intermediate member at two common pivot points 7, 8. The pair of pivot points on any one of the members define, with those on any other member, the corners of a parallelogram. Further, these pairs of pivot points each lie on a line parallel to the longitudinal outermost edges of the straight edge members 2, 3. In this embodiment not only are the distances between the pivots of each pair equal, but all four arms are of equal length.

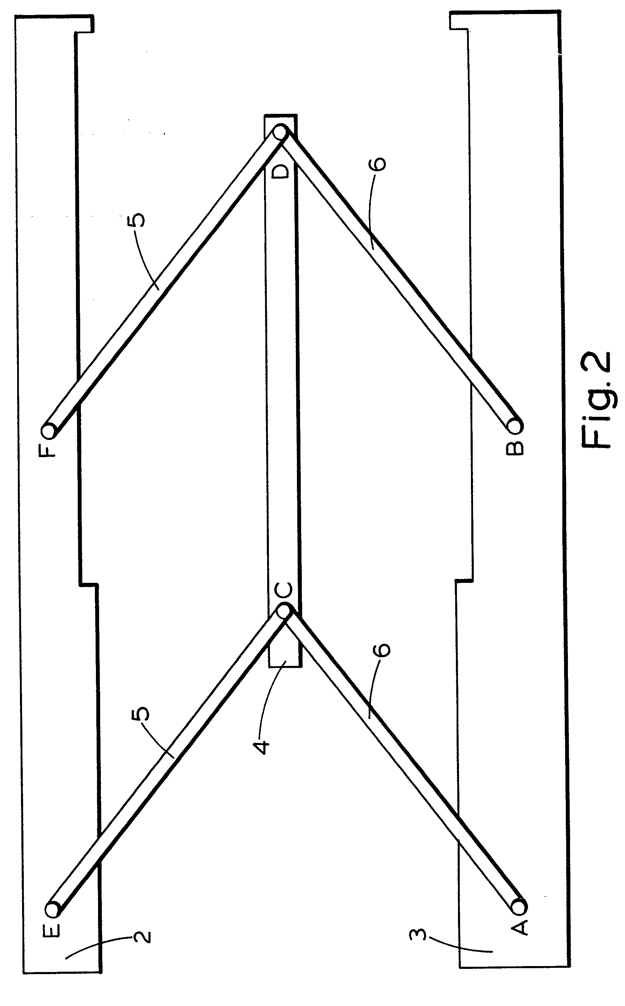

Figure 2 shows the ruler of Figure 1 in an open position. As can be clearly seen from this figure, pivot points define two parallelograms A B D C and E F D C. Since the line C D is common to both parallelograms, A B remains parallel to E F throughout rotation of the arms 5 and 6 from the closed position shown in Figure 1 to the fully extended position in which they are perpendicular to the members 2 to 4. Thus, the straight edges of members 2 and 3 also remain parallel with one another throughout.

In the above embodiment, the straight edge members 2, 3 and intermediate member 4 are of acrylic and the arms 5, 6 are of stainless steel. However, it will be appreciated that other materials may be employed. For example the straight edge and intermediate members may be formed from polyvinylchloride (PVC) and the arms of nickel plated brass or any other suitably rigid and in the context of navigation, non-magnetic material.

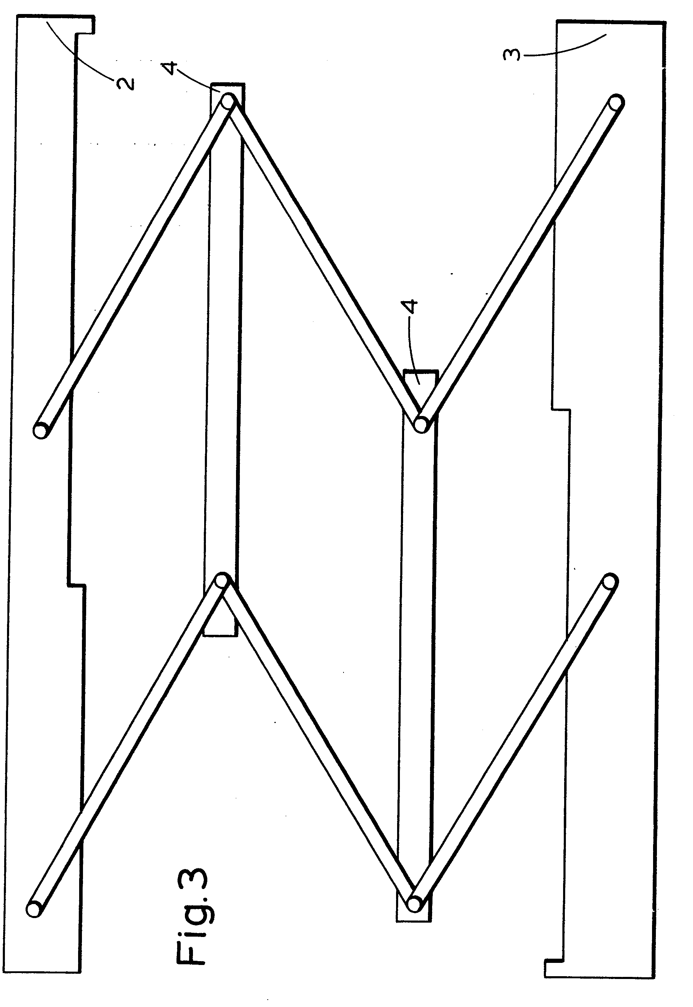

A parallel ruler having a proportionally greater maximum span for its length than the above embodiment may be obtained by interposing further intermediate members 4 between the straight edge members 2 and 3. An embodiment employing two intermediate members 4 is shown in Figure 3. In this, as in the previous embodiment, the pairs of pivot points lie on mutually parallel lines, parallel with the outermost longitudinal edges of the straight edge member

2, 3; the distance between the points of each pair are equal, and the arms of each pair are of equal length. Thus, a succession of parallelograms is defined by the pivot points of each pair of arms so that the straight edges remain parallel throughout their relative movement.

Although in the above described embodiment two pairs of arms are mounted to the or each intermediate member at a single pair of pivot points and all the pairs of arms are of equal length, this is not essential. It is only necessary that the four pivot points of each pair of arms define a parallelogram and that those sides of the parallelograms which extend between the pair of arms are parallel with each other.

It will be understood that whereas the pairs of arms of the above described embodiments are shown to be pivotally mounted immediately at their ends, they may alternatively be pivotally mounted adjacent their ends.

- 6 -                    0168948

CLAIMS

1. A parallel ruler (1) comprising at least three elongate members (2,3,4), each linked to an adjacent one of said members by a pair of arms (5,6) of equal length, said arms being pivotally mounted at each end to said adjacent members such that the pivot points (E,F;C,D;A,B) of a pair of arms on any one member define, with those of that pair on an adjacent member, the corners of a parallelogram, the two outermost elongate members (2,3) defining a pair of parallel straight edges.

2. A parallel ruler as claimed in claim 1 wherein said elongate members (2,3,4) lie in a single plane.

3. A parallel ruler as claimed in claim 1 or 2, wherein said pairs of arms (5,6) are mounted to said elongate members at a single pair of pivot points (E,F;G,D; A,B) per elongate member (2,4,3).

4. A parallel ruler as claimed in any preceding claim which comprises two straight edge members (2,3) and an intermediate member (4) and two pairs of pivotally mounted arms (5,6) linking these members, one of each pair being connected to the intermediate member (4) at a common pivot point (C,D).

5. A parallel ruler as claimed in any preceding claim wherein the elongate members are of acrylic.

6. A parallel ruler as claimed in any preceding claim wherein the arms are of stainless steel.

Fig.1

0168948

Fig.2

Fig.3

0168948

European Patent
Office

EUROPEAN SEARCH REPORT

Application number

EP  85 30 4089

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 139 053 (E.F. WACE) <br> * Figure 1; page 2, lines 27-31 * <br><br> ----- | 1-4 | G 01 C  21/20 <br> B 43 L    7/06 |

|  |  |  | TECHNICAL FIELDS SEARCHED (Int. Cl.4) |
|---|---|---|---|
|  |  |  | G 01 C <br> G 06 G <br> B 43 L |

The present search report has been drawn up for all claims

| Place of search | Date of completion of the search | Examiner |
|---|---|---|
| THE HAGUE | 13-09-1985 | HUNT J.H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82